# FASCICULE DE BREVET EUROPEEN

(11) **EP 4 156 922 B1**
(45) Date de publication et mention de la délivrance du brevet: **18.03.2026**
(21) Numéro de dépôt: 21728246.6
(22) Date de dépôt: 27.05.2021
(51) Int. Cl.: A01M 1/10, A01M 1/14, A01M 29/34, A47C 31/00

(54) **DISPOSITIF POUR L'INTERCEPTION D'INSECTES RAMPANTS, ET MEUBLE ET LIT ÉQUIPÉS D'UN TEL DISPOSITIF**
VORRICHTUNG FÜR DAS ABFANGEN VON KRIECHENDEN INSEKTEN, SOWIE MÖBEL UND BETT, MIT EINER SOLCHEN VORRICHTUNG
DEVICE FOR THE INTERCEPTION OF CRAWLING INSECTS, AND FURNITURE AND BED EQUIPPED WITH SUCH A DEVICE

(30) Priorité: 28.05.2020 FR 2005631
(43) Date de publication de la demande: 05.04.2023
(73) Titulaire: Le Matelas 365, 77400 Saint Thibault des Vignes (FR)
(72) Inventeur: HUGER, Pascal, 77400 LAGNY SUR MARNE (FR)
(74) Mandataire: Cabinet Boettcher
(86) Numéro de dépôt international: PCT/EP2021/064240
(87) Numéro de publication internationale: WO 2021/239896

(56) Documents cités:
- EP-A1- 4 082 335
- WO-A1-01/84924
- WO-A1-2010/081194
- US-A- 5 381 557
- US-A1- 2011 107 654

## Description

L'invention concerne le domaine de la gestion parasitaire et plus particulièrement un dispositif pour l'interception d'insectes rampants tels que les punaises de lit, les fourmis, les blattes... L'invention concerne aussi un meuble équipé d'un tel dispositif ainsi qu'un lit équipé d'un tel dispositif.

### ARRIERE PLAN DE L'INVENTION

Si les punaises de lit avaient disparu peu après la deuxième guerre mondiale suite à l'utilisation de l'insecticide DDT (DichloroDiphénylTrichloroéthane), une recrudescence notable de ces insectes a été observée dans le monde entier au cours de la dernière décennie.

Les punaises de lit mesurent, à l'âge adulte, entre quatre et sept millimètres et ont des pattes munies de crochets leur permettant de grimper sur toutes les surfaces fibreuses ou rugueuses. Elles sont néanmoins incapables de sauter et de voler.

Se nourrissant quasiment exclusivement de sang humain, les punaises de lit fuient la lumière et sont surtout actives la nuit, attirées par la chaleur de nos corps et le dioxyde de carbone que nous exhalons. Elles privilégient les endroits où elles peuvent se dissimuler facilement et se nourrir régulièrement, en particulier les lits. Leur corps plat leur permet de se cacher dans des espaces très restreints, notamment à l'intérieur des sommiers et des couvre-matelas. Il est ainsi difficile de détecter leur présence dans un habitat et donc d'en empêcher le développement. En outre, comme la plupart des insectes, elles ont un cycle de reproduction de quelques jours et une descendance abondante qui devient vite exponentielle. Leurs piqures et les réactions inflammatoires qu'elles provoquent ainsi que leur capacité invasive en font un insecte particulièrement nuisible qui nécessite une intervention dès leur apparition.

Il est possible de lutter contre l'invasion des punaises de lit par des traitements chimiques de type insecticides, plus ou moins efficaces et souvent toxiques également pour les autres habitants (humains ou animaux domestiques) et pour l'environnement. En outre à terme, les insectes peuvent développer des résistances rendant inopérants ces traitements.

Une autre solution consiste à élever et maintenir la température de la zone à traiter à environ 55 degrés Celsius de façon à tuer les punaises de lit à tous les stades de leur cycle de vie. Cette méthode est adaptée aux personnes sensibles aux produits chimiques mais nécessite une préparation et une mise en œuvre lourde.

On connaît par ailleurs des dispositifs permettant de capturer les punaises de lits qui comprennent une substance attractive et un boîtier englué sur lequel la matière attractive est placée. Le boîtier est déposé sur ou à proximité d'un lit pour capter l'attention des punaises qui, une fois en contact avec le corps gluant, n'arrivent plus à s'en détacher.

Il existe aussi des dispositifs comprenant des coupelles à l'intérieur desquelles un peu de terre de Diatomée est disposée. Placées en dessous de chaque pied du lit, elles empêchent les punaises d'atteindre le sommier et capturent celles qui essaient d'en descendre.

S'ils s'avèrent relativement efficaces, ces dispositifs s'avèrent particulièrement voyant et inesthétique. Qui plus est, la terre de Diatomée est particulièrement volatile et peut irriter le nez et les voies respiratoires lorsqu'elle est inhalée.

Les documents WO 01/84924 A1, WO 2010/081194 A1, US 5 381 557 A, US 2011/107654 A1, et EP 4 082 335 A1 décrivent d'autres dispositifs pour l'interception d'insectes rampants. Le document EP 4 082 335 A1 fait partie de l'état de la technique au sens de l'article 54(3) CBE.

### OBJET DE L'INVENTION

L'invention a donc pour objet de proposer un dispositif discret et écologique pour intercepter de manière fiable et efficace des insectes rampants, tout en étant facile à installer.

### RESUME DE L'INVENTION

A cet effet, on prévoit un dispositif pour l'interception d'insectes rampants selon la revendication 1 comprenant au moins un corps comportant :
- une base destinée à venir reposer contre un meuble et comportant en son centre un perçage,
- une première jupe s'étendant à partir de la base de façon à former une paroi latérale fermée circonférentiellement,
- une deuxième jupe entourant extérieurement la première jupe de manière à ce qu'un pourtour extérieur de la paroi latérale soit en regard d'un pourtour interne de la deuxième jupe, et
- au moins une bande adhérente disposée sur le pourtour extérieur de la paroi latérale ou le pourtour interne de la deuxième jupe.

Ainsi, tout insecte rampant empruntant le corps pour atteindre le meuble va, une fois en contact avec la bande adhérente, rester collé et ne plus arriver à s'en détacher. Par ailleurs, en reposant contre le meuble, le dispositif tend à être visuellement discret.

La présence de la deuxième jupe permet de protéger la bande adhérente de la poussière et de faciliter la prise en main du dispositif en évitant tout contact physique avec la bande adhérente. Elle permet également de cacher visuellement les punaises piégées par la bande adhérente.

Selon le mode de réalisation de l'invention, la bande adhérente est portée par un manchon rapporté sur le corps, ce qui permet de faciliter le changement de la bande adhérente et d'en contrôler facilement son état (présence d'insectes, de poussière ...).

De manière particulière, la bande adhérente est une bande à base de glu.

De manière particulière, les première et deuxième jupes sont de forme cylindrique.

De manière particulière, les première et deuxième jupes sont radialement espacées d'une distance au moins égale à dix millimètres de manière à obliger les insectes rampants à traverser la bande adhérente pour passer de la première jupe à la deuxième jupe.

De manière particulière, le manchon est vissé sur le corps.

De manière particulière, le manchon est clipsé sur le corps.

Selon une caractéristique particulière, le manchon est en deux parties pouvant être désolidarisées.

De manière particulière, les deux parties du manchon sont solidarisées temporairement entre elles via un assemblage tenon-mortaise.

Selon une autre caractéristique particulière, une extrémité distale du manchon est texturée, ce qui permet de faciliter la préhension du manchon, notamment lors son assemblage ou de son désassemblage avec le corps.

De manière particulière, le dispositif comprend un élément d'étanchéité agencé pour assurer une étanchéité entre le corps et un élément du meuble agencé dans ledit corps. L'élément d'étanchéité permet ainsi d'empêcher les insectes rampants de s'introduire entre corps et l'élément du meuble agencé dans ledit corps.

De manière particulière, le dispositif comprend un capuchon fermant une extrémité libre du corps opposée à la base.

Selon une autre caractéristique particulière, le perçage et la première jupe forment un logement cylindrique recevant un adaptateur agencé pour permettre le vissage d'un premier élément sur le corps et le vissage du corps sur un deuxième élément. Par exemple, le premier élément est un pied de lit ou un plot surélévateur, et le deuxième élément est un sommier.

De manière particulière, l'adaptateur comprend un insert fileté destiné à recevoir une tige filetée du premier élément (P, P') et duquel s'étend en saillie une tige filetée destinée à être vissée au deuxième élément (S, S').

L'invention concerne également un meuble comprenant une paroi et au moins un tel dispositif agencé de manière à ce que la base repose contre la paroi.

L'invention concerne aussi un lit comprenant un sommier et au moins un pied de lit fixé au sommier entre lesquels est bloqué un tel dispositif.

L'invention concerne en outre une tête de lit comprenant une première paroi agencée pour être en regard d'un sol, une deuxième paroi agencée pour être en regard d'un mur et au moins un tel dispositif, dans laquelle le dispositif est agencé de manière à ce que la base du corps repose contre l'une ou l'autre des première et deuxième parois.

### BREVE DESCRIPTION DES DESSINS

L'invention sera mieux comprise à la lumière de la description qui suit, laquelle est purement illustrative et non limitative, et doit être lue en regard des figures annexées parmi lesquelles :
La figure 1 est une vue en coupe axiale d'un dispositif selon un premier mode réalisation de l'invention, bloqué entre un sommier et un pied de lit ;
La figure 2 est une vue en coupe axiale d'une première variante du dispositif illustré à la figure 1 ;
La figure 3 est une vue de dessus d'une équerre de fixation pour fixer le pied de lit au sommier, visant à décaler ledit pied de lit, et donc le dispositif illustré à la figure 1, vers le centre dudit sommier, selon une deuxième variante de l'invention ;
La figure 4 est une vue en coupe axiale d'une troisième variante du dispositif illustré à la figure 1 ;
La figure 5 est une vue en coupe d'une tête de lit équipée de plusieurs dispositifs tels que celui illustré à la figure 4 ;

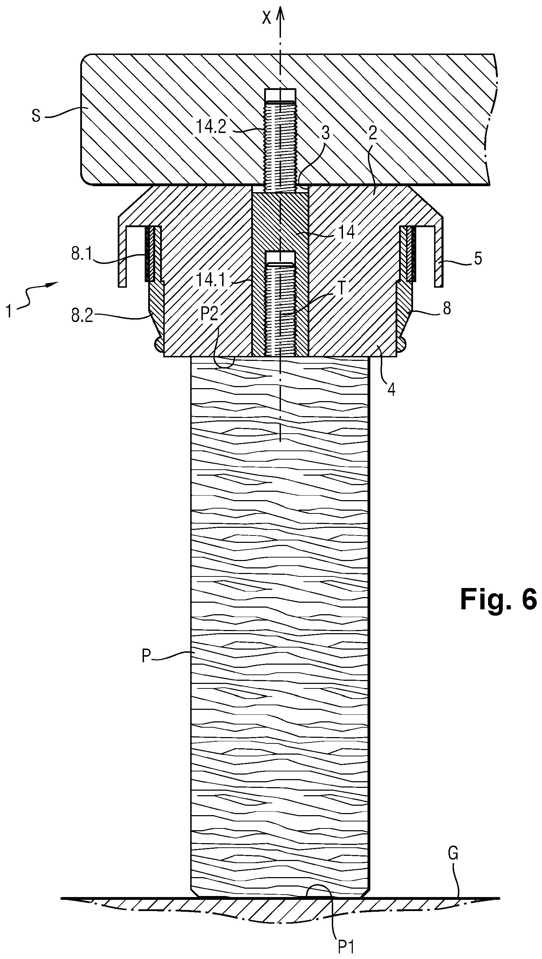

La figure 6 est une vue en coupe axiale d'une quatrième variante du dispositif illustré à la figure 1 ;
La figure 7 est une vue en coupe axiale d'un dispositif, entre un sommier et un plot surélévateur ;
La figure 8 est une vue en coupe axiale d'une première variante du dispositif illustré à la figure 7 ;

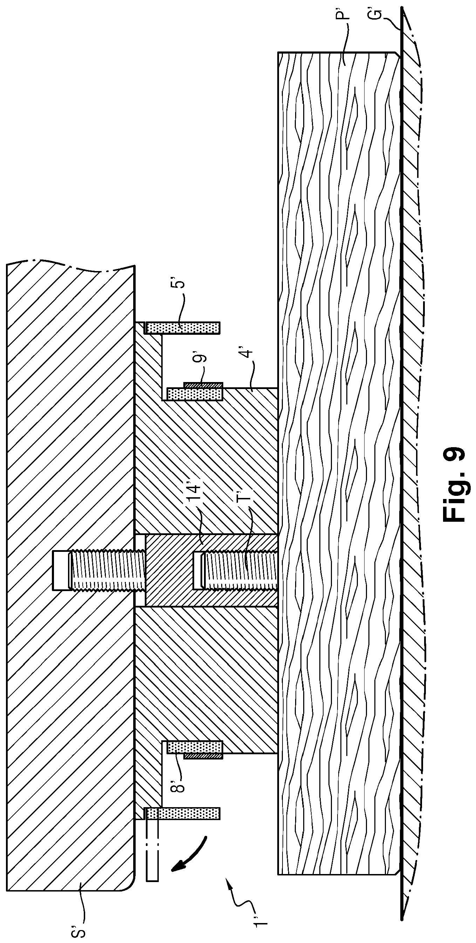

La figure 9 est une vue en coupe axiale d'une deuxième variante du dispositif illustré à la figure 7.

### DESCRIPTION DETAILLEE DE L'INVENTION

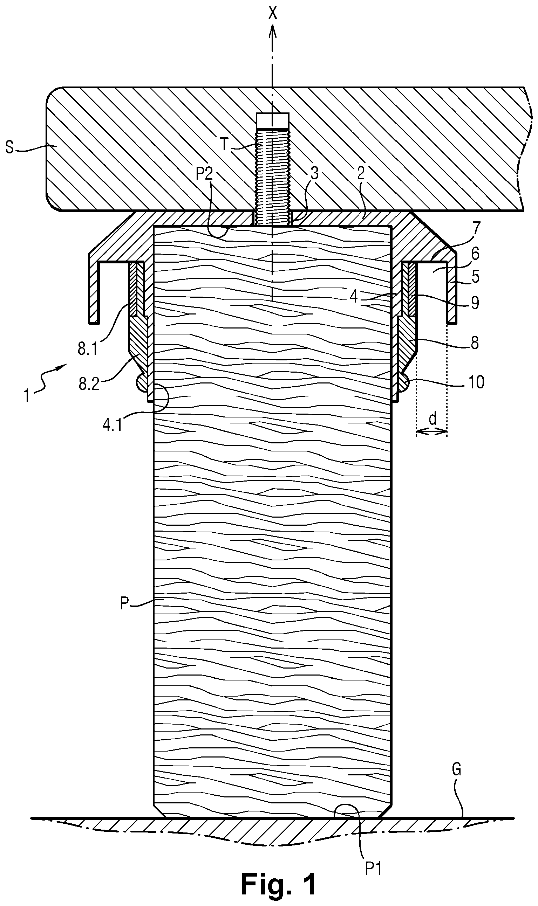

En référence à la figure 1, l'invention est ici décrite en application à l'interception de punaises de lit utilisant un pied P de lit pour atteindre un sommier S. Le pied P est de forme cylindrique et s'étend selon un axe X vertical. Il comprend une face inférieure P1 horizontale destinée à reposer sur un sol G, et une face supérieure P2 horizontale de laquelle s'étend en saillie une tige filetée T destinée à être vissée à une extrémité d'une armature du sommier S.

L'invention prévoit un dispositif d'interception selon un premier mode de réalisation comprenant un corps, généralement désigné en 1, bloqué entre le pied P de lit et le sommier S.

Le corps 1 comporte une base 2 plate, de forme circulaire, qui s'étend suivant un plan horizontal orthogonal à l'axe X. La base 2 comprend en son centre un perçage 3 de diamètre légèrement supérieur à celui de la tige filetée T.

Une première jupe 4 de forme cylindrique s'étend à partir de la base 2 et forme une paroi latérale, fermée circonférentiellement, coaxiale à l'axe X. La première jupe 4 a un diamètre intérieur légèrement supérieur au diamètre du pied et a une extrémité libre 4.1 filetée extérieurement.

Une deuxième jupe 5 de forme cylindrique est reliée à la base 2 et entoure extérieurement la première jupe 4. Les première et deuxième jupes 4, 5 sont coaxiales et définissent avec la base 2 une gorge annulaire 6 ayant un fond 7 plat horizontal. Avantageusement, la deuxième jupe 5 présente extérieurement un état de surface lisse de sorte que les punaises de lit peuvent difficilement grimper et ramper sur ladite deuxième jupe 5. De préférence, la surface externe de la deuxième jupe 5 est traitée sur au moins une portion (mais de préférence est traitée en intégralité) pour être anti-adhérente et limiter encore davantage que les punaises de lit grimpent et rampent sur ladite deuxième jupe 5. A cet effet, la deuxième jupe 5 est ici recouverte d'un revêtement antiadhérent de type Téflon^{®}.

Un manchon 8 de forme globalement cylindrique est vissé sur la première jupe 4 et prend appui contre le fond 7 de la gorge annulaire 6. Le manchon 8 comprend un tronçon supérieur 8.1 portant extérieurement une bande adhérente 9, et un tronçon inférieur 8.2 intérieurement fileté pour coopérer avec l'extrémité filetée 4.1 de la première jupe 4.

La bande adhérente 9 est par exemple une bande à glu double face ayant une face enduite de glu douce pour permettre sa fixation sur le tronçon supérieur du manchon et une autre face enduite de glu forte pour piéger les punaises de lit.

Afin de faciliter son remplacement, la bande adhérente 9 peut être réalisée en deux parties pouvant être temporairement solidarisées entre elle, par exemple via un assemblage tenon-mortaise, de manière à entourer le tronçon supérieur 8.1 du manchon 8. Par exemple les deux parties sont identiques, selon un plan de coupe axial comprenant l'axe X. Chaque partie comprend une bande de glu, de préférence une colle à tack permanent.

Le manchon 8 et la deuxième jupe 5 sont radialement espacés d'une distance d comprise entre 5 et 15 millimètres, de préférence entre 8 et 12 millimètres. De préférence, la distance d est sensiblement égale à dix millimètres pour permettre aux punaises de lit d'accéder à la bande adhérente 9 et de les obliger à la traverser pour passer dudit manchon 8 à ladite deuxième jupe 5.

La bande adhérente 9 est en regard d'un pourtour interne de la deuxième jupe 5, ce qui permet de la protéger de la poussière mais aussi de faciliter la prise en main du corps 1 en évitant tout contact physique avec ladite bande adhérente 9.

De préférence, le manchon est conformé de sorte que le tronçon inférieur 8.2 du manchon 8 ne soit pas entouré par la deuxième jupe 5 (ou ne soit entouré que partiellement par la deuxième jupe 5) pour faciliter la préhension du manchon 8 via ledit tronçon inférieur 8.2, en particulier lors de son vissage et de son dévissage sur la première jupe 4 du corps 1. De préférence, une extrémité libre dudit tronçon inférieur 8.2 est texturée pour faciliter la préhension du manchon 8 en particulier lors de son vissage et de son dévissage sur l'extrémité filetée 4.1 la première jupe 4 du corps 1. Par exemple l'extrémité libre dudit tronçon inférieur 8.2 est texturée de sorte que des demi-sphères 10 soient circonférentiellement reparties sur le pourtour externe de ladite extrémité libre.

L'installation et le fonctionnement du dispositif va maintenant être détaillé.

Avant tout vissage du pied P sur l'armature du sommier S, le corps 1 est emmanché sur ledit pied P de manière à ce que le pied P soit reçu à ajustement dans la première jupe 4 et que la face supérieure P2 du pied soit en appui contre la base 2. La première jupe 4 recouvre alors en partie le pied P et le perçage 3 de la base 2 est traversé par la tige filetée T du pied P pour s'étendre en saillie de la base 2.

Le pied P équipé du corps 1 est ensuite vissé sur l'armature du sommier S via la tige filetée T jusqu'à ce que la base 2 du corps 1 soit en appui contre ladite armature. La base 2 est alors bloquée entre la face supérieure P2 du pied P et l'armature du sommier S, et le corps 1 est en partie caché par le sommier S et s'avère peu voyant.

Lorsqu'une punaise de lit se déplaçant sur le sol G souhaite atteindre le sommier S en utilisant le pied P, elle rampe le long dudit pied P puis grimpe sur le manchon 8. De par sa taille, la punaise de lit n'a alors pas d'autre choix, pour rejoindre la deuxième jupe 5, que de traverser la bande adhérente 9 dans laquelle elle va se retrouver collée. Une fois en contact avec la glu, la punaise de lit n'arrive normalement plus à s'en détacher et devient alors incapable de rejoindre le sommier S ni même de descendre du pied P. La punaise engluée se retrouve ainsi piégée entre le manchon 8 et la deuxième jupe 5 de sorte qu'elle demeure peu visible depuis l'extérieur du corps 1, la bande adhérente étant extérieurement masquée par la deuxième jupe 5. Quand bien même la punaise réussirait à atteindre la deuxième jupe 5 sans traverser la bande adhérente 9, elle serait incapable de ramper le long de ladite deuxième jupe 5 en raison de son état de surface lisse.

Il est possible que l'efficacité de la bande adhérente 9 diminue au cours du temps. Il peut alors être utile de la remplacer.

Pour cela, il n'est avantageusement pas nécessaire de désemmancher le corps 1 du pied P et donc de dévisser ledit pied P du sommier S. Il suffit en effet de dévisser le manchon 8 de la première jupe 4, de retirer la bande adhérente 9 et de la remplacer par une nouvelle avant de revisser ledit manchon 8 sur ladite première jupe 4.

Afin de faciliter le remplacement de la bande adhérente 9, le manchon 8 peut être réalisé en deux parties pouvant être temporairement solidarisées entre elle, par exemple via un assemblage tenon-mortaise. Par exemple les deux parties sont identiques, selon un plan de coupe axial comprenant l'axe X. Chaque moitié de manchon 8 porte alors une moitié de bande adhérente 9.

Ainsi, il n'est pas nécessaire de soulever le sommier S pour dégager le manchon 8 du pied P, mais uniquement de désolidariser les deux pièces du manchon et de les écarter chacune dudit pied P.

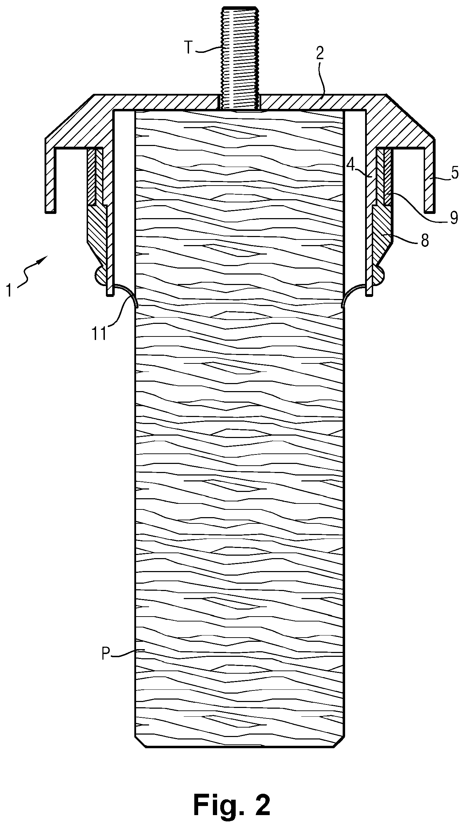

Selon une première variante, dans le cas où le pied P a un diamètre inférieur au diamètre intérieur de la première jupe 4, le dispositif peut comprendre un élément d'étanchéité 11 tel qu'un joint à lèvre souple agencée à l'extrémité libre de la première jupe 4 pour assurer une étanchéité entre le corps 1 et le pied P et ainsi empêcher les punaises de lit de s'introduire entre ledit pied P et la première jupe 4 (figure 2). L'élément d'étanchéité 11 peut notamment être agencé pour permettre d'adapter le dispositif à plusieurs diamètres de pied P de lit.

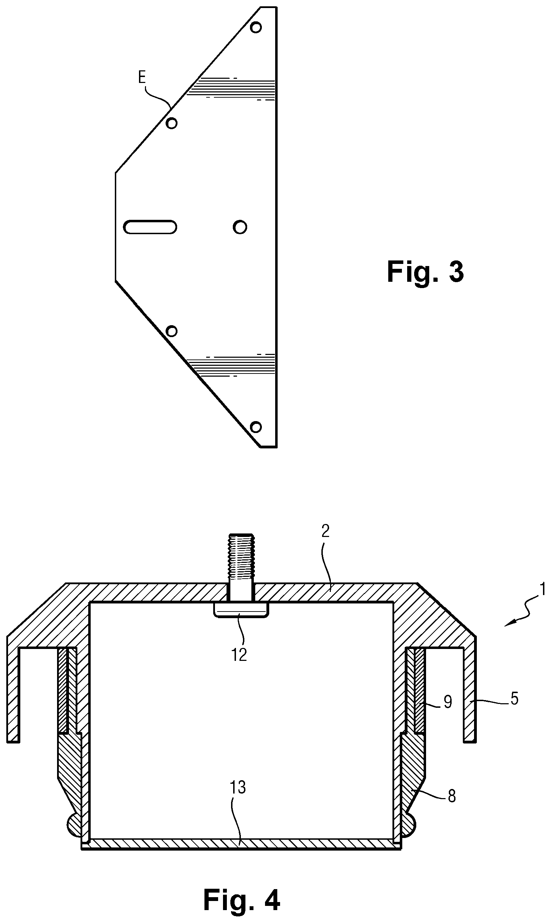

Selon une deuxième variante, cumulable avec la première variante, le pied P peut être éloigné de l'extrémité du sommier S en utilisant une équerre E permettant de déporter le vissage du pied P vers l'intérieur du sommier S et donc de décaler le corps 1 sous ledit sommier S pour réduire la visibilité du corps 1 (figure 3). Ce type d'équerre étant bien connu, elle ne sera pas plus détaillée ici.

De préférence, le dispositif comporte autant de corps 1 qu'il y a de pieds P vissés sur le sommier S pour le surélever du sol G. Ainsi, le dispositif comprendra généralement quatre ou cinq corps 1 venant chacun s'emmancher sur un pied P du sommier S.

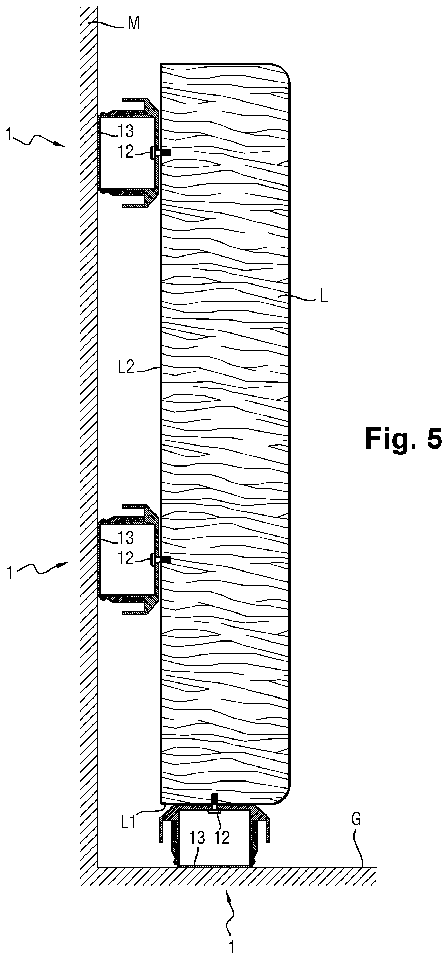

Conformément aux figures 4 et 5, et selon une troisième variante cumulable avec la première variante et/ou la deuxième variante, les corps 1 peuvent également être utilisés pour isoler physiquement une tête de lit L d'un sol G et/ou d'un mur M vertical sur lesquels elle est destinée à reposer.

La tête de lit L comprend une paroi horizontale L1 en regard du sol G et une paroi verticale L2 en regard du mur M. Sur chacune de ces parois L1, L2 repose la base 2 d'un ou plusieurs corps 1 fixés à la tête de lit L via une vis 12 traversant le perçage de ladite base 2.

Chaque corps 1 reçoit un capuchon 13 fermant l'extrémité libre des premières jupes 4. Les capuchons 13 sont en contact avec le sol G ou le mur M et permettent aux corps 1 de présenter une surface d'appui suffisante pour ne pas abîmer ledit sol G et ledit mur M. Il pourra aussi être collé un feutre sur les capuchons 13 pour former une couche d'isolation phonique entre la tête de lit L et le sol G et entre la tête de lit L et le mur M.

Selon une quatrième variante, cumulable avec la deuxième variante ou la troisième variante, la première jupe 4 a un diamètre intérieur sensiblement égal à celui du perçage 3 de sorte que ladite première jupe 4 et ledit perçage 3 forment un logement cylindrique dans lequel est inséré en force un adaptateur agencé pour permettre le vissage du pied P sur le corps 1 d'une part, et le vissage du corps 1 sur le sommier S d'autre part. A cet effet, l'adaptateur 14 comprend un insert 14.1 fileté destiné à recevoir la tige filetée T du pied P et duquel s'étend en saillie une tige filetée 14.2 destinée à être vissée au sommier S. Un tel agencement du corps 1 permet son insertion entre le sommier S et le pied P quelle que soit la forme de ce dernier.

Le pied P est tout d'abord vissé dans l'insert 14.1 jusqu'à ce que la face supérieure P2 du pied soit en appui contre la première jupe 4. L'ensemble formé par le pied P et le corps 1 est ensuite vissé sur l'armature du sommier S via la tige filetée 14.2 jusqu'à ce que la base 2 du corps 1 soit en appui contre ladite armature. On notera pour cela que l'insert 14.1 fileté a une hauteur légèrement inférieure à la hauteur du dispositif 1 qui est définie ici par la base 2 et la première jupe 4. L'intégralité du corps 1 se retrouve alors disposée entre le pied P et l'armature du sommier S.

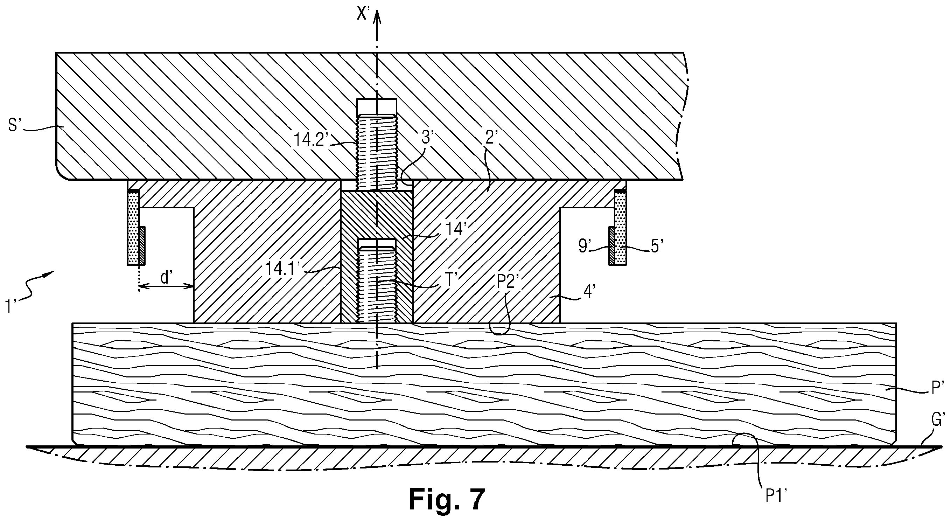

La figure 7 illustre un dispositif d'interception qui est destiné à intercepter des punaises de lit utilisant un plot P' surélévateur de lit pour atteindre un sommier S'. Le plot P' est sensiblement plat et comprend une face inférieure P1' horizontale destinée à reposer sur un sol G', et une face supérieure P2' horizontale de laquelle s'étend en saillie une tige filetée T' selon un axe X' vertical.

Le dispositif comprend un corps, généralement désigné en 1', inséré entre le plot P' surélévateur et le sommier S'. Le corps 1' comporte une base 2' plate, de forme circulaire, qui s'étend suivant un plan horizontal. La base 2' comprend en son centre un perçage 3' de diamètre supérieur à celui de la tige filetée T'.

Une première jupe 4' de forme cylindrique s'étend à partir de la base 2' et forme une paroi latérale, fermée circonférentiellement, coaxiale à l'axe X'. La première jupe 4' a un diamètre intérieur sensiblement égal à celui du perçage 3' de sorte que ladite première jupe 4' et ledit perçage 3' forment un logement cylindrique dans lequel est inséré en force un adaptateur 14' agencé pour permettre le vissage du plot P' sur le corps 1' d'une part, et le vissage du corps 1' sur le sommier S' d'autre part. A cet effet, l'adaptateur 14' comprend un insert 14.1' fileté destiné à recevoir la tige filetée T' du plot P' et duquel s'étend en saillie une tige filetée 14.2' destinée à être vissée au sommier S'.

Une deuxième jupe 5' de forme cylindrique est reliée de manière amovible à la base 2' et entoure extérieurement la première jupe 4'. Les première et deuxième jupes 4', 5' sont coaxiales et définissent avec la base 2' une gorge annulaire 6' ayant un fond 7' plat horizontal. Avantageusement, la deuxième jupe 5' présente extérieurement un état de surface lisse de sorte que les punaises de lit peuvent difficilement grimper et ramper sur ladite deuxième jupe 5'. De préférence, la surface externe de la deuxième jupe 5' est traitée sur au moins une portion (mais de préférence est traitée en intégralité) pour être anti-adhérente et limiter encore davantage que les punaises de lit grimpent et rampent sur ladite deuxième jupe 5'. A cet effet, la deuxième jupe 5' est ici recouverte d'un revêtement antiadhérent de type Téflon^{®}.

La deuxième jupe 5' comprend une surface interne portant une bande adhérente 9'. La bande adhérente 9' est par exemple une bande à glu double face ayant une face enduite de glu douce pour permettre sa fixation sur la deuxième jupe 5' et une autre face enduite de glu forte pour piéger les punaises de lit.

Afin de faciliter le remplacement de la bande adhérente 9', la deuxième jupe 5' peut être réalisée en deux parties pouvant être temporairement solidarisées entre elle, par exemple via un assemblage tenon-mortaise, de manière à entourer un tronçon inférieur de la base 2'. Par exemple les deux parties sont identiques, selon un plan de coupe axial comprenant l'axe X'. Chaque partie comprend une bande de glu, de préférence une colle à tack permanent.

La première jupe 4' et la deuxième jupe 5' sont radialement espacés d'une distance d' comprise entre 5 et 15 millimètres, de préférence entre 8 et 12 millimètres. De préférence, la distance d' est sensiblement égale à dix millimètres pour obliger les punaises de lit à traverser la bande adhérente 9' pour passer de la première jupe 4' à un pourtour externe de la deuxième jupe 5'.

La bande adhérente 9' est en regard d'un pourtour externe de la première jupe 4', ce qui permet de la protéger de la poussière mais aussi de faciliter la prise en main du corps 1' en évitant tout contact physique avec ladite bande adhérente 9'.

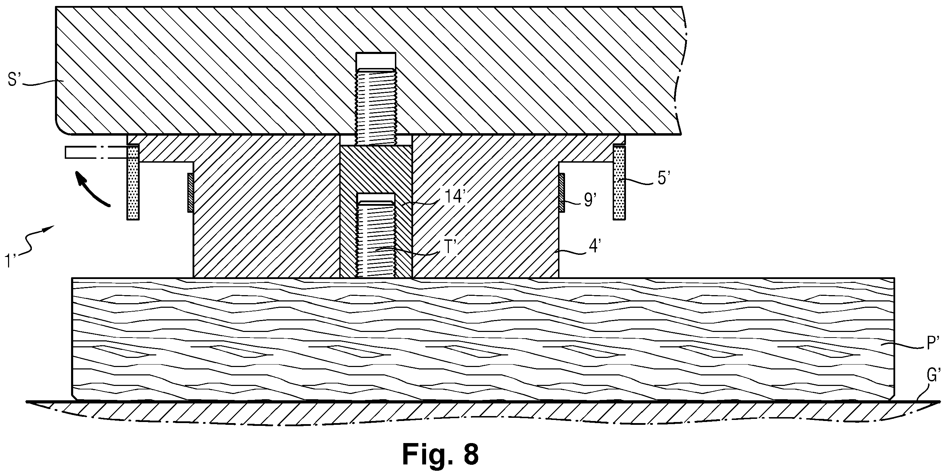

Selon une première variante qui ne constitue pas un mode de réalisation de l'invention, la bande adhérente 9' peut, au lieu d'être portée par la deuxième jupe 5', être portée par un tronçon supérieur de la première jupe 4' (figure 8). La bande adhérente 9' est alors en regard d'un pourtour interne de la deuxième jupe 5', ce qui permet également de la protéger de la poussière mais aussi de faciliter la prise en main du corps 1' en évitant tout contact physique avec ladite bande adhérente 9'.

Afin de faciliter le remplacement de la bande 9', la deuxième jupe 5' peut, comme précédemment, être réalisée en deux parties ou bien encore être déformable élastiquement (au moins localement) de manière à autoriser un pivotement temporaire (illustré en pointillé) de la deuxième jupe 5' autour de la base 2'.

Selon une deuxième variante qui constitue un mode de réalisation de l'invention, la bande adhérente 9' peut aussi être portée par une surface extérieure d'un manchon 8' rapporté, par exemple par clipsage, sur un tronçon supérieur de la première jupe 4'. Le manchon 8', et donc la bande adhérente 9', peuvent être réalisés en deux parties pouvant être temporairement solidarisées entre elles, par exemple via un assemblage tenon-mortaise, de manière à entourer le tronçon supérieur de la première jupe 4'.

Bien entendu, l'invention n'est pas limitée au mode de réalisation décrit mais englobe toute variante entrant dans le champ de l'invention telle que définie par les revendications.

Bien qu'ici le dispositif soit décrit pour intercepter des punaises de lit, il peut aussi servir à intercepter tout insecte rampant ne savant ni voler ni sauter. En fonction de la taille de l'insecte à intercepter, la distance d séparant la bande adhérente 9 et la deuxième jupe 5 pourra être supérieure ou inférieure à dix millimètres.

Le fond 7 de la base 2 du dispositif 1 objet de l'invention n'est pas nécessairement plat et horizontal.

Bien qu'ici le dispositif soit décrit en application à un sommier S, S' ou à une tête de lit L, il peut également convenir à tout autre meuble pourvu ou non de pieds P ou de plots surélévateurs P' (canapé, sofa, buffet, meuble télé...) .

Le dispositif est également adaptable sur des pieds de formes différentes que ceux décrits, notamment sur des pieds de sections carrés ou rectangulaires.

D'autres modes de fixation, autre que le vissage, peuvent être envisagés pour fixer temporairement le manchon 8 à la première jupe 4 (clipsage, quart de tour...).

Bien que le corps soit ici globalement de forme cylindrique, d'autres formes peuvent être envisagées, notamment pour s'adapter à la forme du pied (parallélépipèdique, ovale...). Par exemple, dans le cas où le pied est de section carrée, les première et deuxième jupes du dispositif pourront notamment être elles aussi de section carrée pour être au plus près de la surface extérieure du pied, pour autant que les dites première et deuxième jupes soient concentriques.

Bien que le manchon 8 soit ici rapporté sur la première jupe 4, il peut aussi être rapporté sur la deuxième jupe 5.

Bien que l'adaptateur 14, 14' soit ici agencé pour permettre le vissage du pied P ou du plot surélévateur P' sur le corps 1, 1', il peut être plus généralement agencé pour permettre la fixation du pied P ou du plot surélévateur P' sur le corps 1, 1', par exemple par clipsage ou par emboîtement (la tige T, T' n'est alors pas filetée mais sensiblement lisse).

De manière similaire, bien que l'adaptateur 14, 14' soit ici agencé pour permettre le vissage du corps 1, 1' sur le sommier S, S', il peut être plus généralement agencé pour permettre la fixation du corps 1, 1' sur le sommier S, S', par exemple par clipsage ou par emboîtement.

## Revendications

1. Dispositif pour l'interception d'insectes rampants comprenant au moins un corps (1 ; 1') comportant :
- une base (2 ; 2') destinée à venir reposer contre un meuble et comportant en son centre un perçage (3 ; 3'),
- une première jupe (4 ; 4') s'étendant à partir de la base de façon à former une paroi latérale fermée circonférentiellement, et
- une deuxième jupe (5) entourant extérieurement la première jupe (4) de manière à ce qu'un pourtour extérieur de la paroi latérale soit en regard d'un pourtour interne de la deuxième jupe,
et au moins une bande adhérente (9 ; 9') disposée sur le pourtour extérieur de la paroi latérale ou le pourtour interne de la deuxième jupe, la bande adhérente étant portée par un manchon (8 ; 8') rapporté sur la première jupe ou la deuxième jupe du corps.

2. Dispositif selon la revendication 1, dans lequel la bande adhérente (9 ; 9') est une bande à base de glu.

3. Dispositif selon la revendication 1 ou 2, dans lequel les première et deuxième jupes (4, 5 ; 4', 5') sont de forme cylindrique.

4. Dispositif selon la revendication 3, dans lequel les première et deuxième jupes (4, 5 ; 4', 5') sont radialement espacées d'une distance (d ; d') au moins égale à dix millimètres.

5. Dispositif selon la revendication 1, dans lequel le manchon (8) est vissé sur la première jupe (4 ; 4') ou la deuxième jupe (5) du corps (1).

6. Dispositif selon la revendication 1, dans lequel le manchon (8 ; 8') est clipsé sur la première jupe (4 ; 4') ou la deuxième jupe (5) du corps (1).

7. Dispositif selon l'une quelconque des revendications précédentes, dans lequel le manchon (8 ; 8') est en deux parties pouvant être désolidarisées.

8. Dispositif selon la revendication 7, dans lequel les deux parties du manchon (8 ; 8') sont solidarisées temporairement entre elles via un assemblage tenon-mortaise.

9. Dispositif selon l'une quelconque des revendications précédentes, dans lequel une extrémité distale du manchon (8) est texturée (10).

10. Dispositif selon l'une quelconque des revendications précédentes, comprenant un élément d'étanchéité (11) agencé pour assurer une étanchéité entre le corps (1) et un élément (P) du meuble agencé dans ledit corps.

11. Dispositif selon l'une quelconque des revendications 1 à 9, comprenant un capuchon (13) fermant une extrémité libre du corps (1) opposée à la base (2).

12. Dispositif selon l'une quelconque des revendications 1 à 9, dans lequel le perçage (3 ; 3') et la première jupe (4 ; 4') forment un logement cylindrique recevant un adaptateur (14 ; 14') agencé pour permettre le vissage ou l'emboîtement d'un premier élément (P ; P') sur le corps (1 ; 1'), et le vissage ou l'emboîtement du corps (1 ; 1') sur un deuxième élément (S ; S').

13. Dispositif selon la revendication 12, dans lequel l'adaptateur (14 ; 14') comprend un insert (14.1 ; 14.1') fileté destiné à recevoir une tige filetée (T ; T') du premier élément (P ; P') et duquel s'étend en saillie une tige filetée (14.2 ; 14.2') destinée à être vissée au deuxième élément (S ; S').

14. Meuble comprenant une paroi et au moins un dispositif selon l'une des revendications précédentes, dans lequel le dispositif est agencé de manière à ce que la base (2 ; 2') repose contre la paroi.

15. Lit comprenant un sommier (S) et au moins un pied (P) de lit fixé au sommier entre lesquels est bloqué un dispositif selon l'une quelconque des revendications 1 à 10.

16. Lit comprenant un sommier (S') et au moins un plot (P') surélévateur entre lesquels est fixé un dispositif selon la revendication 12 ou 13.

17. Tête de lit (L) comprenant une première paroi (L1) agencée pour être en regard d'un sol (G), une deuxième paroi (L2) agencée pour être en regard d'un mur (M) et au moins un dispositif selon l'une quelconque des revendications 1 à 13, dans laquelle le dispositif est agencé de manière à ce que la base (2) du corps (1) repose contre l'une ou l'autre des première et deuxième parois.

## Claims

1. A device for intercepting crawling insects, the device comprising at least one body (1; 1'), itself comprising:
· a base (2; 2') for resting against a piece of furniture and having a hole (3; 3') at its center;
· a first skirt (4; 4') extending from the base so as to form a circumferentially closed side wall;
· a second skirt (5) surrounding the first skirt (4) externally so that an outer periphery of the side wall faces an inner periphery of the second skirt; and
· at least one sticky strip (9; 9') arranged on the outer periphery of the side wall or on the inner periphery of the second skirt, the sticky strip being carried by a sleeve (8; 8') attached to the first skirt or the second skirt of the body (1; 1').

2. A device according to claim 1, wherein the sticky strip (9; 9') is a glue-based strip.

3. A device according to claim 1 or claim 2, wherein the first and second skirts (4, 5; 4', 5') are cylindrical in shape.

4. A device according to claim 3, wherein the first and second skirts (4, 5; 4', 5') are spaced apart radially by a distance (d; d') of not less than 10 mm.

5. A device according to claim 1, wherein the sleeve (8) is screwed to the body (1).

6. A device according to claim 1, wherein the sleeve (8; 8') is clipped to the body (1).

7. A device according to any preceding claim, wherein the sleeve (8; 8') is made up of two portions that can be separated.

8. A device according to claim 7, wherein the two portions of the sleeve (8; 8') are secured to each other temporarily by a mortise-and-tenon assembly.

9. A device according to any preceding claim, wherein a distal end of the sleeve (8) is textured (10).

10. A device according to any preceding claim, including a sealing element (11) arranged to provide sealing between the body (1) and an element (P) of the piece of furniture arranged in said body.

11. A device according to any one of claims 1 to 9, including a cover (13) closing a free end of the body (1) remote from the base (2).

12. A device according to any one of claims 1 to 9, wherein the hole (3; 3') and the first skirt (4; 4') form a cylindrical housing receiving an adapter (14; 14') arranged to enable a first element (P; P') to be screwed to or interlocked with the body (1; 1'), and enabling the body (1; 1') to be screwed to or interlocked with a second element (S; S').

13. A device according to claim 12, wherein the adapter (14; 14') comprises a threaded insert (14.1; 14.1') for receiving a threaded rod (T; T') of the first element (P; P') and from which there extends a threaded rod (14.2; 14.2') for screwing to the second element (S; S').

14. A piece of furniture including a face and at least one device according to any preceding claim, wherein the device is arranged in such a manner that the base (2; 2') rests against the face.

15. A bed comprising a frame (S) and at least one bed leg (P) fastened to the frame and having sandwiched between them a device according to any one of claims 1 to 10.

16. A bed comprising a frame (S') and at least one raising block (P') having sandwiched between them a device according to claim 12 or claim 13.

17. A bed head (L) having a first face (L1) arranged to face a floor (G), a second face (L2) arranged to face a wall (M), and at least one device according to any one of claims 1 to 14, wherein the device is arranged in such a manner that the base (2) of the body (1) rests against one or the other of the first and second faces.

## Patentansprüche

1. Vorrichtung zum Abfangen von kriechenden Insekten, umfassend zumindest einen Körper (1 ; 1'), welcher enthält:
- eine Basis (2; 2'), die an einem Möbel zur Anlage gebracht wird und die in der Mitte eine Bohrung (3 ; 3') aufweist,
- eine erste Schürze (4 ; 4'), die sich derart von der Basis weg erstreckt, dass sie eine um den Umfang herum geschlossene Seitenwand bildet, und
- eine zweite Schürze (5), welche die erste Schürze (4) derart von außen umgibt, dass ein Außenumfang der Seitenwand einem Innenumfang der zweiten Schürze gegenüberliegt, und
zumindest ein Haftband (9 ; 9'), das an dem Außenumfang der Seitenwand oder an dem Innenumfang der zweiten Schürze angeordnet ist, wobei das Haftband von einer auf der ersten Schürze oder auf der zweiten Schürze des Körpers aufgesetzten Buchse (8 ; 8') getragen wird.

2. Vorrichtung nach Anspruch 1, wobei es sich bei dem Haftband (9 ; 9') um ein Band auf Leimbasis handelt.

3. Vorrichtung nach Anspruch 1 oder 2, wobei die erste und die zweite Schürze (4, 5 ; 4', 5') zylindrisch ausgebildet sind.

4. Vorrichtung nach Anspruch 3, wobei die erste und die zweite Schürze (4, 5 ; 4', 5') mit einem Abstand (d ; d') von zumindest zehn Millimeter radial voneinander beabstandet sind.

5. Vorrichtung nach Anspruch 1, wobei die Buchse (8) auf der ersten Schürze (4 ; 4') oder auf der zweiten Schürze (5) des Körpers (1) aufgeschraubt ist.

6. Vorrichtung nach Anspruch 1, wobei die Buchse (8 ; 8') auf der ersten Schürze (4 ; 4') oder auf der zweiten Schürze (5) des Körpers (1) aufgeclipst ist.

7. Vorrichtung nach einem der vorhergehenden Ansprüche, wobei die Buchse (8 ; 8') in zwei voneinander lösbaren Teilen ausgebildet ist.

8. Vorrichtung nach Anspruch 7, wobei beide Teile der Buchse (8; 8') durch eine Zapfenverbindung temporär fest miteinander verbunden sind.

9. Vorrichtung nach einem der vorhergehenden Ansprüche, wobei es sich bei einem distalen Ende der Buchse (8) um ein strukturiertes Ende (10) handelt.

10. Vorrichtung nach einem der vorhergehenden Ansprüche, umfassend ein Dichtungselement (11), das dafür ausgelegt ist, eine Dichtheit zwischen dem Körper (1) und einem in dem Körper angeordneten Element (P) des Möbels zu gewährleisten.

11. Vorrichtung nach einem der Ansprüche 1 bis 9, umfassend eine Kappe (13), die dazu dient, ein der Basis (2) gegenüberliegendes freies Ende des Körpers (1) zu verschließen.

12. Vorrichtung nach einem der Ansprüche 1 bis 9, wobei die Bohrung (3 ; 3') und die erste Schürze (4; 4') eine zylindrische Aufnahme zum Aufnehmen eines Passstücks (14 ; 14') bilden, das derart ausgebildet ist, dass ein erstes Element (P ; P') auf den Körper (1 ; 1') aufgeschraubt oder in diesen hineingesteckt werden kann, und dass der Körper (1 ; 1') auf ein zweites Element (S ; S') aufgeschraubt oder in dieses hineingesteckt werden kann.

13. Vorrichtung nach Anspruch 12, wobei das Passstück (14; 14') einen Gewindeeinsatz (14.1 ; 14.1') umfasst, der zur Aufnahme einer Gewindestange (T ; T' ) des ersten Elements (P ; P') dient und von welchem aus hervorstehend sich eine auf das zweite Element (S ; S') aufzuschraubende Gewindestange (14.2 ; 14.2') erstreckt.

14. Möbel, umfassend eine Wand und zumindest eine Vorrichtung nach einem der vorhergehenden Ansprüche, wobei die Vorrichtung derart ausgelegt ist, dass die Basis (2 ; 2') an der Wand anliegt.

15. Bett, umfassend einen Bettrahmen (S) und zumindest einen an dem Bettrahmen befestigten Bettfuß (P), zwischen denen eine Vorrichtung nach einem der Ansprüche 1 bis 10 festgeschraubt ist.

16. Bett, umfassend einen Bettrahmen (S') und zumindest einen Betterhöher (P'), zwischen denen eine Vorrichtung nach Anspruch 12 oder 13 befestigt ist.

17. Bettkopfteil (L), umfassend eine erste Wand (L1), die dafür ausgelegt ist, einem Fußboden (G) gegenüberzuliegen, eine zweite Wand (L2), die dafür ausgelegt ist, einer Zimmerwand (M) gegenüberzuliegen, und zumindest eine Vorrichtung nach einem der Ansprüche 1 bis 13, wobei die Vorrichtung derart ausgelegt ist, dass die Basis (2) des Körpers (1) entweder an der ersten oder an der zweiten Wand anliegt.
